# EUROPEAN PATENT APPLICATION

(11) **EP 4 180 679 A1**
(43) Date of publication of application: **17.05.2023**
(21) Application number: 21208430.5
(22) Date of filing: 16.11.2021
(51) Int. Cl.: F16C 19/54, F16D 1/10, H02K 7/00, H02K 5/16, B60K 1/00

(54) **IMPROVED ELECTRIC DRIVETRAIN**

(71) Applicant: Valeo eAutomotive Germany GmbH, 91056 Erlangen (DE)
(72) Inventor: HAAS, Bernd, 91056 Erlangen (DE); Kühlkamp, Karsten, 91056 Erlangen (DE)
(74) Representative: Valeo Powertrain Systems

(57) **Abstract**

An electric drivetrain (1, 1a, 1b) is disclosed, which comprises an electric machine (2) and a gearbox (3, 3a, 3b) coupled thereto, wherein a rotor shaft (4) of the electric machine (2) is coupled to a gearbox shaft (8) of the gearbox (3, 3a, 3b) in a torque transferring and longitudinally displaceable manner. Moreover, the electric drivetrain (1, 1a, 1b) comprises a pressure elastic element (13) being arranged between the rotor shaft (4) and the gearbox shaft (8) forcing the same away from each other. In addition, a vehicle (17) with such an electric drivetrain (1, 1a, 1b) is disclosed.

## Description

### TECHNICAL FIELD

The invention relates to an electric drivetrain, comprising an electric machine and a gearbox coupled thereto, wherein a rotor shaft of the electric machine is coupled to a gearbox shaft of the gearbox in a torque transferring and longitudinally displaceable manner. Moreover, the invention relates to a vehicle having at least two axles, at least one of which is driven at least partially or intermittently by the electric drivetrain of the above kind.

### BACKGROUND ART

An electric drivetrain of the above kind generally is known in prior art and can be used if a rotational speed or torque of an electric machine has to adapted to a desired rotational speed or torque in a particular application. Often, the electric machine and the gearbox are fabricated by different manufacturers and coupled to each other later on by use of a torque transferring and longitudinally displaceable connection. Beneficially, ball bearings of the electric drivetrain are axially preloaded to avoid or at least reduce unwanted oscillations, noise and wear. Usually, a spring element is arranged at the non-driven end of the rotor shaft of the electric machine and covered and held there by a steel bushing.

### DISCLOSURE OF INVENTION

An object of the invention is to provide an improved electric drivetrain and an improved electric vehicle. In particular, a solution shall be proposed, which is easier and more flexible to manufacture and needs less parts.

The object of the invention is solved by an electric drivetrain as disclosed in the opening paragraph, which additionally comprises a pressure elastic element, which is arranged between the rotor shaft and the gearbox shaft forcing both away from each other (applying an axial force between each other).

In addition, the object of the invention is solved by a vehicle having at least two axles, at least one of which is driven, wherein power is provided at least partially or intermittently by the electric drivetrain as outlined above.

By the proposed measures, a ball bearing of the electric drivetrain can be preloaded to avoid or at least reduce unwanted oscillations, noise and wear in the loose bearing in an easier way and by use of less parts. In detail, the pressure elastic element is arranged at the driven end of the rotor shaft for this reason.

Further advantageous embodiments are disclosed in the claims and in the description as well as in the figures.

Beneficially, the pressure elastic element is embodied as a spring washer, a wave washer, a helical spring or as a ring made of an elastomer or rubber. In this way, proven and commercially available standard means can be used for the proposed solution. Spring washers, wave washers, and helical springs are preferably made of spring steel and generate a force by elastic deformation of a special shape. Instead, rings made of an elastomer or rubber can have a comparably simple shape.

In one embodiment, the pressure elastic element is arranged in contact with a shoulder of the rotor shaft or a ring fixedly mounted to the rotor shaft. In this way, the pressure force caused by the pressure elastic element can be transferred to the rotor shaft.

In another embodiment, the pressure elastic element is in contact with a shoulder of the gearbox shaft or a ring fixedly mounted to the gearbox shaft. In this way, the pressure force caused by the pressure elastic element can be transferred to the gearbox shaft.

In yet another embodiment, the rotor shaft and the gearbox shaft are coupled by means of a loose splined shaft connection or a loose feather key connection. In this way, the rotor shaft can be coupled to the gearbox shaft in a torque transferring and longitudinally displaceable manner.

Beneficially, the rotor shaft and the gearbox shaft can be supported by means of three ball bearings, each being arranged in a bearing seat, wherein one of the three ball bearings is mounted to the rotor shaft and two of the three ball bearings are mounted to the gearbox shaft or vice versa. A first one of the bearing seats, which is arranged in the electric machine, and a second one of the bearing seats, which is arranged in the gearbox, each is configured in such a way to take a force in one axial direction caused by the pressure elastic element. In other words, said two bearings are adjusted bearings. In detail, the first bearing seat takes a force applied to the rotor shaft and the second bearing seat takes a force applied to the gearbox shaft.

In another beneficial embodiment, a third one of the bearing seats based on form fit is configured in such a way is not able to take a force (is incapable of taking a force) in axial direction caused by the pressure elastic element. In other words, one of the three bearings is a loose bearing. Accordingly, there are two adjusted bearings and one defined loose bearing.

Generally, the three ball bearings form a center ball bearing and two outer ball bearings. In one embodiment, bearing seats, which are configured in such a way to take a load in axial direction caused by the pressure elastic element, are arranged at the center ball bearing and at one of the outer ball bearings. In another embodiment, said bearing seats are arranged at both outer bearings. Accordingly, an application dependent task allocation is achieved.

### BRIEF DESCRIPTION OF DRAWINGS

The invention now is described in more detail hereinafter with reference to particular embodiments, which the invention however is not limited to.
- Fig. 1: shows a cross sectional view of a first embodiment of an electric drivetrain;
- Fig. 2: shows the force flow in the electric drivetrain of Fig. 1;
- Fig. 3: shows a cross sectional view of a second embodiment of an electric drivetrain with a different arrangement of the ball bearings;
- Fig. 4: shows the force flow in the electric drivetrain of Fig. 3 and
- Fig. 5: shows a schematic view of an electric vehicle;

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

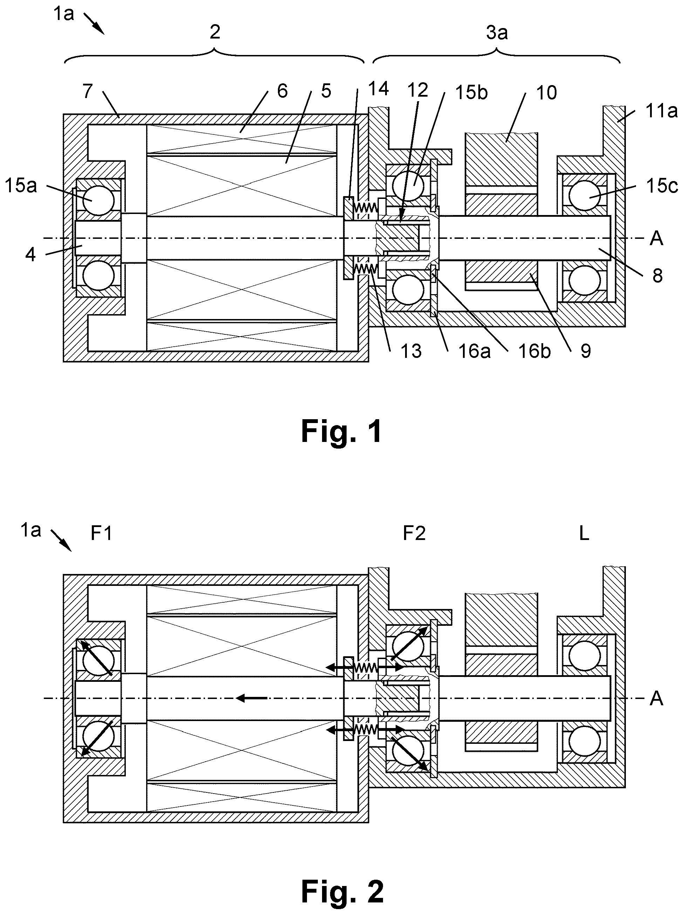

Fig. 1 shows a first embodiment of an electric drivetrain 1a, which comprises an electric machine 2 and a gearbox 3a coupled thereto. The electric machine 2 comprises a rotor shaft 4, a rotor 5 mounted to the rotor shaft 4, a stator 6 and a motor housing 7. The gearbox 3a comprises a gearbox shaft 8, a pinion 9, a gear wheel 10 coupled to the pinion 9 and a gearbox housing 11a. The rotor shaft 4 of the electric machine 2 is coupled to the gearbox shaft 8 of the gearbox 3a in a torque transferring and longitudinally displaceable manner. In detail this is done by means of a loose splined shaft connection 12 in this embodiment. However, a loose feather key connection would work as well.

Moreover, the electric drivetrain 1a comprises a pressure elastic element 13, which is arranged between the rotor shaft 4 and the gearbox shaft 8 and which forces them away from each other. In detail, the pressure elastic element 13 is in contact with a ring 14 fixedly mounted to the rotor shaft 4 and with a shoulder of the gearbox shaft 8. However, the pressure elastic element 13 may also be in contact with a shoulder of the rotor shaft 4 and/or a ring fixedly mounted to the gearbox shaft 8. For example, the pressure elastic element 13 can be embodied as a spring washer, a wave washer, a helical spring or as a ring made of an elastomer or rubber.

In addition, the electric drivetrain 1 comprises three ball bearings 15a..15c, which are each arranged in a bearing seat supporting the rotor shaft 4 and the gearbox shaft 8 and allow rotation of them around the axis A. In this embodiment, the ball bearing 15a is mounted to the rotor shaft 4 and the ball bearings 15b, 15c are mounted to the gearbox shaft 8. However, in an alternative embodiment, one of the three ball bearings 15a..15c can be mounted to the gearbox shaft 8 and two of the three ball bearings 15a..15c can be mounted to the rotor shaft 4. An axial movement of the ball bearing 15a to the left is hindered by a step in the motor housing 7. An axial movement of the ball bearing 15b is hindered by the gearbox housing 11a and a shoulder of the gearbox shaft 8 on one side and fixing rings 16a and 16b on the other side.

Fig. 2 now shows the force flow in the electric drivetrain 1a. In this embodiment, axial forces caused by the pressure elastic element 13 are taken or carried by a first one of the bearing seats, which is arranged in the electric machine 2, and a second one of the bearing seats, which is arranged in the gearbox 3a. In detail, the ball bearing 15a is embodied as a first adjusted bearing F1, and the ball bearing 15b is embodied as a second adjusted bearing F2. In more detail, the first adjusted bearing F1 may take over an axial force directed to the left, whereas the second adjusted bearing F2 may take over axial forces to the right. For the axial force caused by the pressure elastic element 13, the fixing ring 16a is relevant in this embodiment.

The third one of the bearing seats based on form fit is configured in such a way that is not able to take a force in axial direction caused by the pressure elastic element 13. In other words, the ball bearing 15c is embodied as a loose bearing L.

In the example of Figs. 1 and 2, the three ball bearings 15a.. 15c form a center ball bearing 15b and two outer ball bearings 15a, 15c, wherein bearing seats being capable of taking a load in axial direction caused by the pressure elastic element 13 are arranged at the center ball bearing 15b and at one of the outer ball bearings 15a, 15c, which in this embodiment is the outer ball bearing 15a.

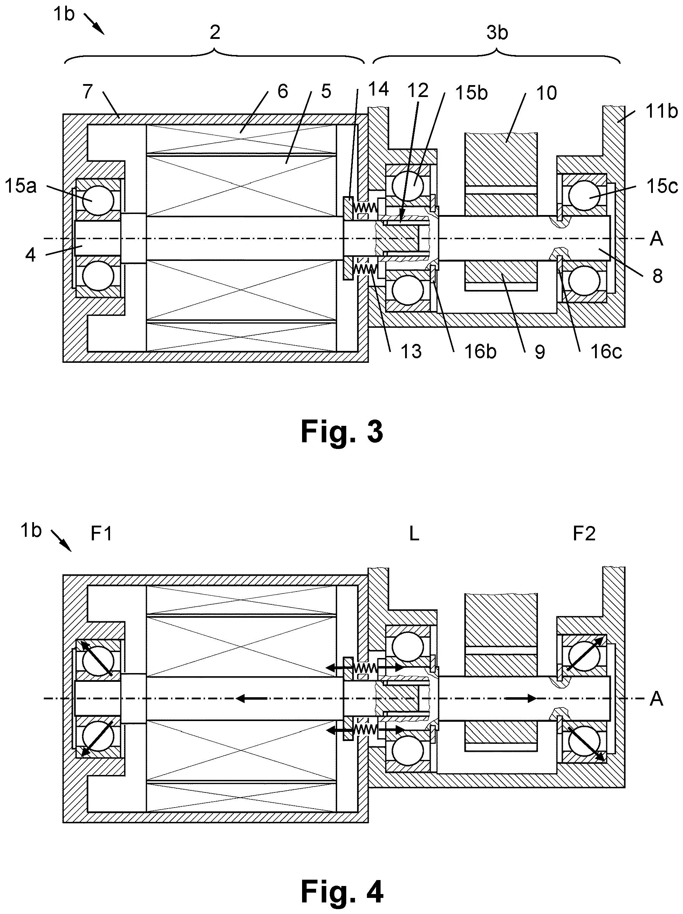

However, this is not the only possibility, and bearing seats being configured in such a way to take a load in axial direction caused by the pressure elastic element 13 can also be arranged at both outer ball bearings 15a, 15c. Such an embodiment of an electric drivetrain 1b, which is similar to the electric drivetrain 1a, is shown in Figs. 3 and 4, wherein Fig. 4 similarly to Fig. 2 shows the axial force flow in the electric drivetrain 1b. In contrast to the electric drivetrain 1a, the gearbox housing 11b and the roles of ball bearings 15a.. 15c are different in this embodiment. In detail, the center ball bearing 15b can take forces only acting to the left but is a loose bearing L in view of the axial force caused by the pressure elastic element 13 acting to the right. Instead, the outer ball bearing 15c forms a fixed bearing F2, which additionally is held by a fixing ring 16c.

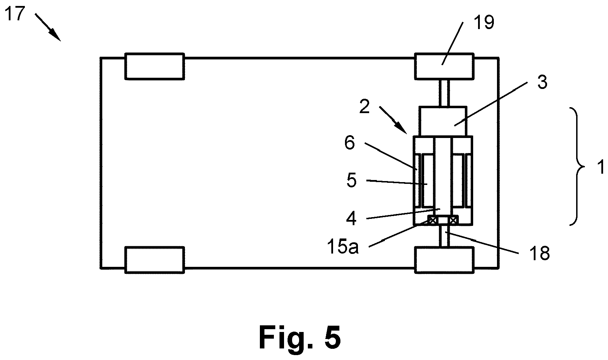

Fig. 5 finally shows an electric vehicle 17, which comprises an electric drivetrain 1 with an electric motor 2 and a gearbox 3 as outlined above. The electric motor 2 is mechanically coupled to wheels 19 of the electric vehicle 17 by means of the gearbox 3 and side shafts 18. The electric motor 2 may be provided for driving the electric vehicle 17 permanently in a pure electric car or intermittently, e.g. in combination with a combustion engine in a hybrid car.

It is noted that the invention is not limited to the embodiments disclosed hereinbefore, but combinations of the different variants are possible. In reality, the electrive drivetrain 1, 1a, 1b and the electric vehicle 17 may have more or less parts than shown in the figures. In general, the pressure elastic element 13 can also be arranged on the inside of the rotor shaft 4 and/or the gearbox shaft 8 if at least one of them is a hollow shaft and if the pressure elastic element 13 has a smaller diameter than indicated in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1, 1a, 1b: electric drivetrain
- 2: electric machine
- 3, 3a, 3b: gearbox
- 4: rotor shaft
- 5: rotor

- 6: stator
- 7: motor housing
- 8: gearbox shaft
- 9: pinion
- 10: gear wheel

- 11a, 11b: gearbox housing
- 12: loose splined shaft connection
- 13: pressure elastic element
- 14: ring
- 15a..15c: ball bearing

- 16a..16c: fixing ring
- 17: vehicle
- 18: side shaft
- 19: wheel

## Claims

1. Electric drivetrain (1, 1a, 1b), comprising an electric machine (2) and a gearbox (3, 3a, 3b) coupled thereto, wherein a rotor shaft (4) of the electric machine (2) is coupled to a gearbox shaft (8) of the gearbox (3, 3a, 3b) in a torque transferring and longitudinally displaceable manner,
**characterized in that**
a pressure elastic element (13) is arranged between the rotor shaft (4) and the gearbox shaft (8) forcing the same away from each other.

2. Electric drivetrain (1, 1a, 1b) as claimed in claim 1, **characterized in that** the pressure elastic element (13) is embodied as a spring washer, a wave washer, a helical spring or as a ring made of an elastomer or rubber.

3. Electric drivetrain (1, 1a, 1b) as claimed in claim 1 or 2, **characterized in that** the pressure elastic element (13) is in contact with a shoulder of the rotor shaft (4) or a ring (14) fixedly mounted to the rotor shaft (4).

4. Electric drivetrain (1, 1a, 1b) as claimed in any one of claims 1 to 3, **characterized in that** the pressure elastic element (13) is in contact with a shoulder of the gearbox shaft (8) or a ring fixedly mounted to the gearbox shaft (8).

5. Electric drivetrain (1, 1a, 1b) as claimed in any one of claims 1 to 4, **characterized in that** the rotor shaft (4) and the gearbox shaft (8) are coupled by means of a loose splined shaft connection (12) or a loose feather key connection.

6. Electric drivetrain (1, 1a, 1b) as claimed in any one of claims 1 to 5, **characterized in that** the rotor shaft (4) and the gearbox shaft (8) are supported by means of three ball bearings (15a..15c), each being arranged in a bearing seat, wherein one of the three ball bearings (15a..15c) is mounted to the rotor shaft (4) and two of the three ball bearings (15a..15c) are mounted to the gearbox shaft (8) or vice versa and wherein a first one of the bearing seats, which is arranged in the electric machine (2), and a second one of the bearing seats, which is arranged in the gearbox (3, 3a, 3b), each is configured in such a way to take a force in axial direction caused by the pressure elastic element (13).

7. Electric drivetrain (1, 1a, 1b) as claimed in claim 6, **characterized in that** a third one of the bearing seats based on form fit is configured in such a way is not able to take a force in axial direction caused by the pressure elastic element (13).

8. Electric drivetrain (1, 1a, 1b) as claimed in claim 6 or 7, **characterized in that** the three ball bearings (15a..15c) form a center ball bearing (15b) and two outer ball bearings (15a, 15c), wherein bearing seats being configured in such a way to take a load in axial direction caused by the pressure elastic element (13) are arranged
- at the center ball bearing (15b) and at one of the outer ball bearings (15a, 15c) or
at both outer bearings (15a, 15c).

9. Vehicle (17) having at least two axles (18), at least one of which is driven, **characterized in that** power is provided at least partially or intermittently by the electric drivetrain (1, 1a, 1b) according to any one of claims 1 to 8.
